Europäisches Patentamt

European Patent Office

Office européen des brevets

(11) Veröffentlichungsnummer: **0 258 632**
**A2**

(12) **EUROPÄISCHE PATENTANMELDUNG**

(21) Anmeldenummer: **87110972.4**

(22) Anmeldetag: **29.07.87**

(51) Int. Cl.⁴: **A23C 19/14** , A01G 27/00

(30) Priorität: **04.09.86 CH 553/86**

(43) Veröffentlichungstag der Anmeldung:
**09.03.88 Patentblatt 88/10**

(84) Benannte Vertragsstaaten:
**AT DE FR GB IT NL SE**

(71) Anmelder: **Schweizerische Käseunion AG**
**Monbijoustrasse 45**
**CH-3001 Bern(CH)**

(72) Erfinder: **Ramseier, Ernst**
**Münstergasse 70**
**CH-3011 Bern(CH)**

(74) Vertreter: **Patentanwälte Schaad, Balass &**
**Partner**
**Dufourstrasse 101 Postfach**
**CH-8034 Zürich(CH)**

(54) **Verfahren zum Erzeugen von Bild- oder Schriftzeichen auf Käse und Käseerzeugnissen.**

㉗ Durch örtlich begrenzte Wärmeeinwirkung vorbestimmter Dauer und mit einer zwischen Plastizitätstemperatur und Verbrennungstemperatur liegenden Behandlungstemperatur wird eine Verfärbung in einer Randzone des Käses bzw. des Käseerzeugnisses erzeugt.

EP 0 258 632 A2

## Verfahren zum Erzeugen von Bild-oder Schriftzeichen auf Käse und Käseerzeugnissen

Die Erfindung betrifft ein Verfahren zum Erzeugen von Bild-oder Schriftzeichen auf Käse und Käseerzeugnissen.

Um auf Herkunft bzw. Name, Echtheit und Eigenschaften des Produktes hinzuweisen, sind bei Käse, die in Form von Laiben oder Teilen davon in den Handel gebracht werden, an der Oberfläche Markierungen anzubringen. So ist es beispielsweise bekannt, die Markierung durch Bedrucken mit Farbe oder durch Aufkleben von Etiketten auf der Rinde des Käselaibes vorzunehmen. Obwohl diese Markierungen den Vorteil haben, auch im Detailhandel teilweise bis zum Konsumenten erkennbar zu sein, stossen die entsprechenden Markierungsarten heute wegen der Anwendung von Fremdstoffen auf Bedenken. Andererseits erfüllen Markierungen, die sich lediglich auf der Verpackung befinden, den gewünschten Zweck nicht, da sie auf dem Wege zum Detailhandel häufig verlorengehen.

Aufgabe der Erfindung ist es, ein Verfahren zum Erzeugen von Bild-oder Schriftzeichen auf Käse und Käseerzeugnissen zu schaffen, das unter Aktivierung von natürlichen Eigenschaften des Gutes die Anwendung von Fremdstoffen überflüssig macht und eine bis zum Konsumenten erkennbare Markierung erzeugt.

Das erfindungsgemässe Verfahren kennzeichnet sich durch die Massnahmen nach dem Kennzeichen von Anspruch 1.

Das erfindungsgemässe Verfahren macht sich demnach die Tatsache zu eigen, dass die im Käse enthaltenen Stoffe unter der Einwirkung von Wärme selbst eine nutzbare Verfärbung erzeugen, welche geeignet ist, Bild-oder Schriftzeichen zu liefern. Nachfolgend wird der Begriff "Markierungen" für solche Bild-oder Schriftzeichen verwendet.

Gemäss einer bevorzugten Ausführungsform des Verfahrens erfolgt die Wärmeeinwirkung dadurch, dass Kontaktwärme am Gut erzeugt wird. Hierzu kann ein z.B. elektrisch beheizter Stempel verwendet werden, der mit dem Gut in Berührung gebracht wird. Vorzugsweise wird der Stempel mit einer vorbestimmten Kraft an das Gut angepresst, und der Stempel kann als Prägestempel ausgebildet sein, so dass die Markierungen sowohl durch eine Verfärbung wie durch eine Prägeverformung gebildet werden.

Nachfolgend sind drei Ausführungsbeispiele des erfindungsgemässen Verfahrens näher erläutert.

Bei allen Ausführungsformen wurde mit Kontaktwärme und Oberflächenverformung gearbeitet. Hierzu wurde ein Prägestempel aus Messing verwendet, der eine effektive Prägefläche von 25cm² aufwies. Mit einer regulierbaren elektrischen Heizeinrichtung war der Stempel auf eine Temperatur von maximal 650°C erwärmbar. Die Temperatur am Stempel konnte mit einem Oberflächenfühler abgenommen und auf einem digital anzeigenden Temperaturmessgerät überwacht werden.

Gemäss dem ersten Ausführungsbeispiel wurde das Verfahren an Emmentaler-Käse in Form eines ungereinigten Käselaibes durchgeführt.

Der auf 440°C erwärmte Stempel wurde mit einer Kraft von 40 N auf die Käserinde gepresst. Nach einer Dauer 1,1 sec. wurde der Stempel abgehoben.

Auf der Käserinde zeigte sich ein scharfes Abbild des Stempels einerseits als Verfärbung und andererseits als Verformung der Oberfläche. Das Stempelbild wies eine goldbraune Farbe auf, die sich von der weissgelben Farbe der unbehandelten Rinde deutlich abhob. Gegenüber der unbehandelten Rindenoberfläche lag dieses Bild etwa 0,5 mm vertieft, wobei die Ränder von einer wulstartigen Erhebung mit einer Breite von ca. 1,5 mm und einer Höhe von zwischen 0,5 und 0,6 mm umgeben war.

Bei einem Schnitt durch die Rinde liess sich eine Verfärbung bis auf eine Tiefe von ca. 1,0 mm feststellen. Dem markierten Käselaib wurden nach einer Lagerzeit von 90 Tagen Genussproben aus einer Tiefe zwischen 2 und 4 mm unterhalb der Rindenoberfläche aus markierten und nicht markierten Abschnitten entnommen. Beim Vergleich konnten weder im Hinblick auf Geruch noch im Hinblick auf Geschmack Veränderungen festgestellt werden.

Im zweiten Ausführungsbeispiel wurde das Verfahren an einem gereinigten Käselaib von Emmentaler Käse angeführt.

Der wiederum auf 440°C erhitzte Stempel wurde mit einer Kraft von 40 N auf die Käserinde gepresst und von dieser nach 0,8 sec Anpressdauer abgehoben.

Das Ergebnis war mit jenem des ersten Ausführungsbeispieles nahezu identisch, wobei Farbe und Vertiefung des Bildes gleich waren.

Bei der in gleicher Weise im ersten Ausführungsbeispiel durchgeführten Genussprobe konnten ebenfalls keine Unterschiede festgestellt werden.

Für das dritte Ausführungsbeispiel wurde Greyerzerkäse in Form eines gereinigten Käselaibes herangezogen.

Der Stempel wurde auf eine Temperatur von 480°C erwärmt und mit einem Druck von 25 N während einer Dauer von 1,5 sec gegen die Käserinde gepresst.

Als Ergebnis zeigte sich am Käselaib ein Abbild des Stempels in goldbrauner Farbe. Die Prägetiefe lag bei 0,4 mm und eine kleine wulstartige Erhebung umrandete die Vertiefung. Gegenüber der Farbe der Oberfläche war das Bild deutlich erkennbar.

Bei den in gleicher Weise wie beim ersten Ausführungsbeispiel durchgeführten Genussproben konnten keine Unterschiede festgestellt werden, wobei an den Proben aus dem markierten Bereich auch keine farblichen Veränderungen sichtbar waren.

Aus einer grossen Zahl von an Rindenstücken von unterschiedlichen Käsesorten durchgeführten Versuchen konnte festgestellt werden, dass die Temperaturbereiche, in denen das Verfahren den angestrebten Erfolg bringt, von der Käseart sowie vom Vorhandensein und der Beschaffenheit der Rinde abhängig sind. Jedoch lässt sich innerhalb der angegebenen Grenzen für jede Käseart ein günstiger Bereich bestimmen, wobei die Einwirkungsdauer mit zunehmender Temperatur innerhalb dieser Bereiche kürzer gehalten werden kann.

Die Verfärbung im Bild oder Schriftzeichen, das in der erfindungsgemässen Weise erzeugt ist, zeigt, dass an der Oberfläche bzw. auch in einer oberflächennahen Randzone eine teilweise Zersetzung eingetreten ist; offensichtlich nimmt das Ausmass der Zersetzung mit der Entfernung von der Oberfläche rasch ab.

## Ansprüche

1. Verfahren zum Erzeugen von Bild-oder Schriftzeichen auf Käse oder Käseerzeugnissen, dadurch gekennzeichnet, dass eine Verfärbung in einer Randzone des Gutes durch örtlich begrenzte Wärmeeinwirkung vorbestimmter Dauer mit einer zwischen der Plastizitätstemperatur und der Verbrennungstemperatur liegenden Behandlungstemperatur erzeugt wird.

2. Verfahren nach Anspruch 1, dadurch gekennzeichnet, dass die Wärmeeinwirkung mit einer Zersetzungstemperatur erfolgt.

3. Verfahren nach Anspruch 1 oder 2, dadurch gekennzeichnet, dass die Wärmeeinwirkung bezüglich der Randzone linien-oder flächenförmig erfolgt.

4. Verfahren nach einem der vorangehenden Ansprüche, dadurch gekennzeichnet, dass die Wärmeeinwirkung durch die Kontaktwärme eines Stempels erfolgt.

5. Verfahren nach Anspruch 4, dadurch gekennzeichnet, dass zwischen dem Stempel und der Oberfläche des Gutes ein Anpressdruck erzeugt wird.

6. Verfahren nach Anspruch 4 oder 5, dadurch gekennzeichnet, dass durch den Stempel die Oberfläche des Gutes verformt wird.

7. Verfahren nach Anspruch 6, dadurch gekennzeichnet, dass die Oberfläche des Gutes durch Prägen verformt wird.

8. Verfahren nach einem der vorangehenden Ansprüche, dadurch gekennzeichnet, dass die der Wärmeeinwirkung ausgesetzte Randzone auf einen Eindringbereich beschränkt wird, der kleiner ist als die Rindendicke.

9. Verfahren nach einem der vorangehenden Ansprüche, dadurch gekennzeichnet, dass die Oberfläche des Gutes vor der Wärmeeinwirkung einer Reinigung unterworfen wird.

10. Verfahren nach einem der vorangehenden Ansprüche, dadurch gekennzeichnet, dass die Wärmeeinwirkung in Umfangszonen eines Käselaibes oder Teilen davon erfolgt.